(19)

**Europäisches Patentamt**

**European Patent Office**

**Office européen des brevets**

(11) **EP 3 098 729 A1**

(12) **EUROPEAN PATENT APPLICATION**

(43) Date of publication:
**30.11.2016 Bulletin 2016/48**

(51) Int Cl.:
***G06F 17/30*** (2006.01)

(21) Application number: **15305831.8**

(22) Date of filing: **29.05.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Thomson Licensing**
**92130 Issy-les-Moulineaux (FR)**

(72) Inventors:
• **Dupuy, Christophe**
**35576 Cesson-Sévigné (FR)**
• **Diot, Christophe**
**92443 Issy-Les-Moulineaux (FR)**

(74) Representative: **Huchet, Anne et al**
**TECHNICOLOR**
**1-5, rue Jeanne d'Arc**
**92130 Issy-les-Moulineaux (FR)**

(54) **METHOD AND DEVICE FOR CREATING RECOMMENDATION LISTS OF MEDIA ASSETS**

(57) A recommendation system uses text reviews of media assets to generate lists of those media assets most similar to a combination of genres shared with a first media asset. The system concatenates text reviews of the same media assets into separate documents. A latent Dirichlet allocation is used to extract profiles from the aggregated documents which are then used to generate a similarity measure relative to the first media asset, based on common profile characteristics. In one embodiment, the profile characteristic is genre of the media assets.

**100**

```
Start   101
  │
  ▼
Concatenate text reviews   110
  │
  ▼
Perform LDA   120
  │
  ▼
Calculate distance
measurements   130
  │
  ▼
Create recommendation
lists   140
  │
  ▼
```

**Figure 1**

EP 3 098 729 A1

**Description**

TECHNICAL FIELD

The present principles relate generally to the field of topic models, specifically applied to the problem of generating recommendation sublists.

BACKGROUND

Given a selected movie by a user, recommendation systems generally suggest one list of similar movies to the user. The most recent recommenders try to propose diverse contents to the user through several sublists.

Each of these sublists often represents a specific feature of the selected movie. A label is attached to each sublist in order to describe the feature represented by the sublist. However, labels attached to these sublists are often not meaningful as they are generated automatically.

Recent advancements in application of topic models to text reviews have allowed wide generation of recommendation lists. The main goal of topic models is to extract latent topics from a corpus of text documents. A review is a set of words written by a user about one media asset, for example a movie. The words comprising the review can be useful for generating recommendations, as in the movie example where words such as "action", "horror", or "comedy" are very relevant.

SUMMARY

These and other drawbacks and disadvantages of the prior art are addressed by various described embodiments, which are directed to methods and apparatus for application of topic models to generation of recommendation lists.

According to one general aspect, a method is provided. The method comprises concatenating, in each of a plurality of respective documents, a plurality of text reviews of a plurality of media assets. The method further comprises performing latent Dirichlet allocation on the documents to extract profiles of the respective media assets. The method further comprises calculating a plurality of distance measurements between a particular media asset and a number of other media assets sharing a common combination of profile characteristics, and further comprises creating recommendation lists of media assets grouped by combinations of profile characteristics, based on the calculated distance measurements from the particular media asset.

According to another general aspect, an apparatus is provided. The apparatus comprises a first processor that concatenates, in each of a plurality of respective documents, a plurality of text reviews of a plurality of media assets. The apparatus further comprises a second processor to perform latent Dirichlet allocation on the documents to extract profiles of the respective media assets. The apparatus further comprises a third processor that calculates a plurality of distance measurements between a particular media asset and a number of other media assets sharing a common combination of profile characteristics, and comprises a fourth processor that creates recommendation lists of media assets grouped by combinations of profile characteristics, based on the calculated distance measurements from a particular media asset.

The details of one or more implementations are set forth in the accompanying drawings and the description below. Even if described in one particular manner, it should be clear that implementations can be configured or embodied in various manners. For example, an implementation can be performed as a method, or embodied as an apparatus, such as, for example, an apparatus configured to perform a set of operations or an apparatus storing instructions for performing a set of operations, or embodied in a signal. Other aspects and features will become apparent from the following detailed description considered in conjunction with the accompanying drawings and the claims.

BRIEF DESCRIPTION OF THE DRAWINGS

The present principles can be better understood in accordance with the following exemplary figures, in which:

Figure 1 shows one embodiment of a method under the present principles.
Figure 2 shows one embodiment of an apparatus under the present principles.

DETAILED DESCRIPTION

Ratings of items such as movies can be used to extract profiles of the items using matrix factorization techniques. One can then compare movies given their ratings profiles. However, ratings do not convey information about the different features of a movie, such as genre, actors, director, for example. For any given movie, it is difficult to extract similar type movies from ratings.

Another method to extract profiles is from text reviews. The main idea is to extract a latent profile for each movie and compare the different profiles with a suitable distance measure. Latent Dirichlet Allocation (LDA) is a method of natural language processing that uses a probabilistic model to infer hidden topics given a text corpus. The LDA method enables words to be explained by inferred topics to explain similarities between the different parts. Using the principles described herein, movie profiles can be extracted from text reviews. Given a selected movie and a sorted list of other movies by similarity, the current embodiments provide a method that automatically reorders the movies into different sublists, labelled based on a combination of profile characteristics, for example genres, of the movies. As the labels of these sublists are a combination of genres, they remain precise and relevant for the user to understand the recommendation. Other profile characteristic combinations can be used.

A corpus is a list of documents, and a document is a list of words. In an original corpus, each document is a review related to a user and a movie. A topic is a discrete distribution over words of the vocabulary. Each document of a text corpus can be represented as topic probabilities. In the present method, all the reviews related to one movie are aggregated into one document. As a result, the vocabulary of each document is more consistent. With this new corpus, the extracted topics are more consistent. In a text document, for example, LDA models each document as a number of topics and assumes words in the document are from one or more of the topics. LDA assumes that each word $w_n^d$ of the $d^{th}$ document is generated as follows:

- Choose $\theta^d \sim$ Dirichlet ($\alpha$)

- For each word $w_n^d \in \mathbf{w}^d$:

  - Choose a topic $z_n^d \sim \mathrm{Multinomial}(\theta^d)$
  - Choose a word $w_n^d \sim \mathrm{Multinomial}(\phi^{z_n^d})$

Movie information is then included in LDA by constraining the topic document distribution $\theta$ to be the same for all of the reviews related to the same movie. It is equivalent to considering a new corpus where each document is the concatenation of all the reviews related to a single movie. As a result, we obtain a topic distribution $\theta^m$ for each movie $m$, which establishes the profile of movie $m$.

As the profiles $\theta^m$ generated with the model above are discrete distributions over topics, we use the Kullback-Leibler (KL) divergence, which is suited for distributions. Given a movie m, we want to compute a list of similar movies to m. For any other movie with profile $\theta$ the similarity can be computed as follows:

$$KL(\theta^m \| \theta) = \sum_{k=0}^{K} \theta_k^m \log \frac{\theta_k^m}{\theta_k}$$

where K is the number of topics.

Consequently, given movie m, the other movies of the dataset can be ordered from the most similar to the least similar to m thanks to the distance described above. Small values of $KL(\theta^m \| \theta)$ means that $\theta^m$ are close to each other.

Instead of recommending a raw list of movies to the user, the current embodiments suggest to the user different sublists of movies. This allows the system to recommend different relevant categories of movies to the user.

Let $N$ = 10 be the desired number of movies by sublist, $L$ = 4 the number of sublists and $m$ a selected movie by the user. The current embodiments use the genres attached to each movie and compute the different sublists and labels as follows:

- $l$ = 1: The movies of the first sublist are the $N$ closest movies to $m$ with respect to $KL(\theta^m \| \theta)$. Its label is '*Similar movies to m*'
- For $l$ = 2,..., $L$:

  - Remove the movies and labels that have been selected in the previous sublists
  - For all possible pair of genres ($G_1$, $G_2$) (e.g., $G_1$ = *Action* and $G_2$ = *Thriller*), compute the average distance over the $N$ closest remaining movies to $m$ which have at least genres $G_1$ and $G_2$. This average distance is denoted by $d(G_1, G_2)$.
  - Select the pair of genres ($G_1^*$, $G_2^*$) that minimizes $d$. The label of this sublist is ($G_1^*$, $G_2^*$).

The results of this method applied to the movie "Inception" are presented Table 1.

One advantage of this method is that the features of each movie are inferred automatically, without any supervision. This method can be used to display a more precise and diverse list of similar movies.

**Table 1**

| Inception (2010) - ['Action', 'Mystery', 'Sci-Fi'] | | | | |
|---|---|---|---|---|
| | Similar movies | (Crime, Drama) | (Sci-Fi, Thriller) | (Action, Adventure) |
| 1 | 127 Hours (2010) | The Dark Knight (2008) | Super 8 (2011) | Star Wars: Episode III- Revenge of the Sith (2005) |
| 2 | Fight Club (1990) | The Departed (2006) | District 9 (2009) | All Is Lost (2013) |
| 3 | Memento (2000) | No Country for Old Men (2007) | Blade Runner (1982) | Solomon Kane (2009) |
| 4 | The Hobbit: An Unexpected Journey (2012) | Reservoir Dogs (1992) | Gattaca (1997) | Serenity (2005) |
| 5 | V for Vendetta (2005) | Michael Clayton (2007) | I Am Legend (2007) | Batman Begins (2005) |
| 6 | Gravity (TV Series 2010- ) | The Town (2010) | Limitless (2011) | The Book of Eli (2010) |
| 7 | Requiem for a Dream (2000) | American History X (1998) | Jurassic Park (1993) | The Day After Tomorrow (2004) |
| 8 | King Kong (2005) | The Girl with the Dragon Tattoo (2011) | Clorverfield (2008) | X-Men: First Class (2011) |
| 9 | The Lord of the Rings: The Fellow-ship of the Ring (2001) | Collateral (2004) | The Mist (2007) | 2012 (2009) |
| 10 | War of the Worlds (2005) | Catch Me If You Can (2002) | Children of Men (2006) | The Guardian (2006) |

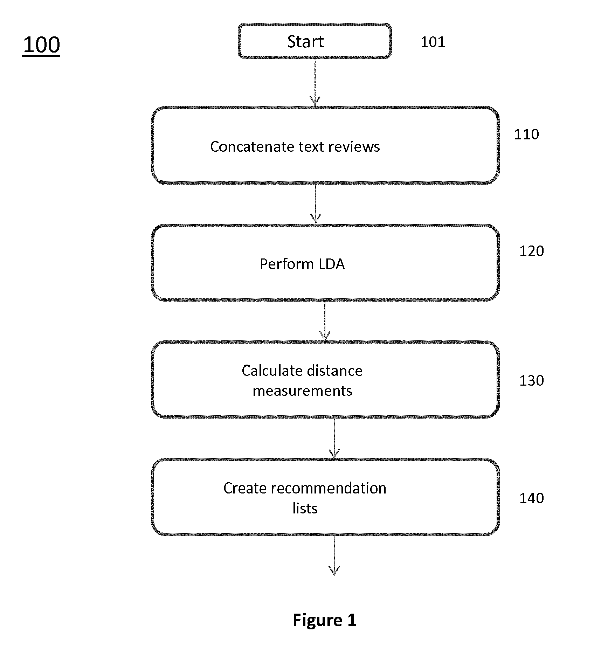

One embodiment of a method under the present principles is shown in Figure 1. The method commences at Start block 101 and proceeds to block 110 for concatenating, in each of a plurality of respective documents, a plurality of text reviews of a plurality of media assets. Control proceeds from block 110 to block 120 for performing latent Dirichlet allocation on the documents to extract profiles of the respective media assets. Control proceeds from block 120 to block 130 for calculating a plurality of distance measurements between a particular media asset and a number of other media assets sharing a common combination of profile characteristics. Control then proceeds from block 130 to block 140 for creating recommendation lists of media assets grouped by combinations of profile characteristics, based on the calculated distance measurements from the particular media asset.

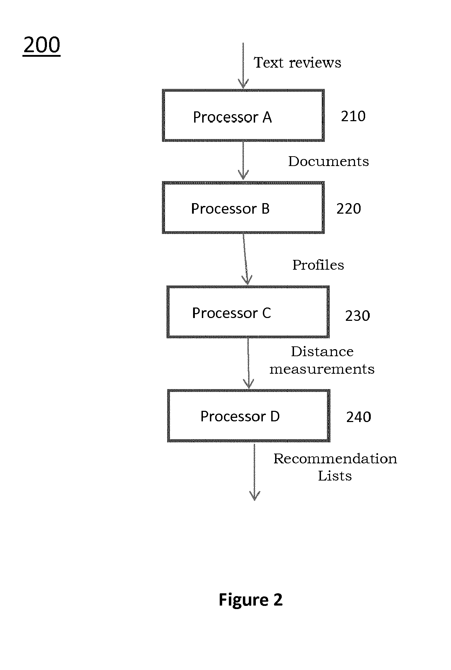

One embodiment of an apparatus under the present principles is shown in Figure 2. The apparatus comprises a first processor Processor A 210 that concatenates, in each of a plurality of respective documents, a plurality of text reviews of a plurality of media assets. The output of Processor A 210 is in signal connectivity with the input of a second processor Processor B 220 that performs latent Dirichlet allocation on the documents to extract profiles of the respective media assets. The output of Processor B 220 is in signal connectivity with the input of a third processor Processor C 230 that calculates a plurality of distance measurements between a particular media asset and a number of other media assets sharing a common combination of profile characteristics. The output of Processor C 230 is in signal connectivity with the input of a fourth processor Processor D 240 that creates recommendation lists of media assets grouped by combinations of profile characteristics, based on the calculated distance measurements from a particular media asset.

The processors in any of the described embodiments can be implemented using distinct processors, integrated processors, or some combination of integrated and distinct processors. One or all of the processors can be implemented as part of other circuitry as well.

The present description illustrates the present principles. It will thus be appreciated that those skilled in the art will be able to devise various arrangements that, although not explicitly described or shown herein, embody the present principles and are thereby included within the present principles.

All examples and conditional language recited herein are intended for pedagogical purposes to aid the reader in understanding the present principles and the concepts contributed by the inventor(s) to furthering the art, and are to be construed as being without limitation to such specifically recited examples and conditions.

Moreover, all statements herein reciting principles, aspects, and embodiments of the present principles, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the present principles. Similarly, it will be appreciated that any flow charts, flow diagrams, state transition diagrams, pseudocode, and the like represent various processes which can be substantially represented in computer readable media and so executed by a computer or processor, whether or not such computer or processor is explicitly shown.

The functions of the various elements shown in the figures can be provided through the use of dedicated hardware as well as hardware capable of executing software in association with appropriate software. When provided by a processor, the functions can be provided by a single dedicated processor, by a single shared processor, or by a plurality of individual processors, some of which can be shared. Moreover, explicit use of the term "processor" or "controller" should not be construed to refer exclusively to hardware capable of executing software, and can implicitly include, without limitation, digital signal processor ("DSP") hardware, read-only memory ("ROM") for storing software, random access memory ("RAM"), and non-volatile storage.

Other hardware, conventional and/or custom, can also be included. Similarly, any switches shown in the figures are conceptual only. Their function can be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The present principles as defined by such claims reside in the fact that the functionalities provided by the various recited means are combined and brought together in the manner which the claims call for. It is thus regarded that any means that can provide those functionalities are equivalent to those shown herein.

Reference in the specification to "one embodiment" or "an embodiment" of the present principles, as well as other variations thereof, means that a particular feature, structure, characteristic, and so forth described in connection with the embodiment is included in at least one embodiment of the present principles. Thus, the appearances of the phrase "in one embodiment" or "in an embodiment", as well any other variations, appearing in various places throughout the specification are not necessarily all referring to the same embodiment.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This can be extended, as readily apparent by one of ordinary skill in this and related arts, for as many items listed.

These and other features and advantages of the present principles can be readily ascertained by one of ordinary skill in the pertinent art based on the teachings herein. It is to be understood that the teachings of the present principles can be implemented in various forms of hardware, software, firmware, special purpose processors, or combinations thereof.

Most preferably, the teachings of the present principles are implemented as a combination of hardware and software. Moreover, the software can be implemented as an application program tangibly embodied on a program storage unit. The application program can be uploaded to, and executed by, a machine comprising any suitable architecture. Preferably, the machine is implemented on a computer platform having hardware such as one or more central processing units ("CPU"), a random access memory ("RAM"), and input/output ("I/O") interfaces. The computer platform can also include an operating system and microinstruction code. The various processes and functions described herein can be either part of the microinstruction code or part of the application program, or any combination thereof, which can be executed by a CPU. In addition, various other peripheral units can be connected to the computer platform such as an additional data storage unit and a printing unit.

It is to be further understood that, because some of the constituent system components and methods depicted in the accompanying drawings are preferably implemented in software, the actual connections between the system components or the process function blocks can differ depending upon the manner in which the present principles are programmed. Given the teachings herein, one of ordinary skill in the pertinent art will be able to contemplate these and similar implementations or configurations of the present principles.

Although the illustrative embodiments have been described herein with reference to the accompanying drawings, it is to be understood that the present principles are not limited to those precise embodiments, and that various changes and modifications can be effected therein by one of ordinary skill in the pertinent art without departing from the scope of the present principles. All such changes and modifications are intended to be included within the scope of the present principles as set forth in the appended claims.

## Claims

1. A method, comprising:

   concatenating, in each of a plurality of respective documents, a plurality of text reviews of a plurality of media assets;
   performing latent Dirichlet allocation on said documents to extract profiles of said respective media assets;
   calculating a plurality of distance measurements between a particular media asset and a number of other media assets sharing a common combination of profile characteristics; and
   creating recommendation lists of media assets grouped by combinations of profile characteristics, based on said calculated distance measurements from said particular media asset.

2. A method, comprising:

   aggregating in each of a plurality of respective documents, text reviews representative of the respective media assets;
   performing latent Dirichlet allocation on said documents to extract profiles of said respective media assets;
   calculating a plurality of distance measurements between a particular media asset and a number of other media assets sharing a common combination of profile characteristics; and
   creating recommendation lists of media assets grouped by combinations of profile characteristics, based on said calculated distance measurements from said particular media asset.

3. The method of Claim 1, wherein concatenating comprises constraining a topic document distribution in said latent Dirichlet allocation to be equal for all text reviews of a particular media asset.

4. The method of Claim 1, wherein creating recommendation lists is done using the Kullback-Leibler divergence measure.

5. The method of Claim 1, wherein said combination is a set of two genres.

6. The method of Claim 1, wherein said creating recommendation lists comprises averaging a number of distance measurements between said particular media asset and a combination of genres, and ordering recommendations comprising said recommendation lists according to the distance measurements.

7. The method of Claim 1, wherein said profile characteristic is genre.

8. An apparatus, comprising:

   a first processor that concatenates, in each of a plurality of respective documents, a plurality of text reviews of a plurality of media assets;
   a second processor to perform latent Dirichlet allocation on said documents to extract profiles of said respective media assets; and
   a third processor that calculates a plurality of distance measurements between a particular media asset and a number of other media assets sharing a common combination of profile characteristics; and
   a fourth processor that creates recommendation lists of media assets grouped by combinations of profile characteristics, based on said calculated distance measurements from said particular media asset.

9. An apparatus, comprising:

   a first processor that aggregates in each of a plurality of respective documents, text reviews representative of the respective media assets;

a second processor to perform latent Dirichlet allocation on said documents to extract profiles of said respective media assets; and

a third processor that calculates a plurality of distance measurements between a particular media asset and a number of other media assets sharing a common combination of profile characteristics; and

a fourth processor that creates recommendation lists of media assets grouped by combinations of profile characteristics, based on said calculated distance measurements from said particular media asset.

10. The apparatus of Claim 8, wherein aggregating comprises constraining a topic document distribution in said latent Dirichlet allocation to be equal for all text reviews of a particular media asset.

11. The apparatus of Claim 8, wherein creating recommendation lists is done using the Kullback-Leibler divergence measure.

12. The apparatus of Claim 8, wherein said combination is a set of two genres.

13. The apparatus of Claim 8, wherein said creation of recommendation lists comprises averaging a number of distance measurements between said particular media asset and a combination of genres, and ordering recommendations comprising said recommendation lists according to the distance measurements.

14. The apparatus of Claim 8, wherein said profile characteristic is genre.

15. Computer program comprising program code instructions executable by a processor for implementing the steps of a method according to at least one of claims 1 to 7.

100

Start     101

Concatenate text reviews     110

Perform LDA     120

Calculate distance
measurements     130

Create recommendation
lists     140

**Figure 1**

200

Text reviews

| Processor A | 210 |

Documents

| Processor B | 220 |

Profiles

| Processor C | 230 |

Distance
measurements

| Processor D | 240 |

Recommendation
Lists

**Figure 2**

Europäisches
Patentamt

European
Patent Office

Office européen
des brevets

# EUROPEAN SEARCH REPORT

Application Number

EP 15 30 5831

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Suvir Bhargav: "Efficient Features for Movie Recommendation Systems", , 1 October 2014 (2014-10-01), pages 1-53, XP055235469, Retrieved from the Internet: URL:http://kth.diva-portal.org/smash/get/diva2:759691/FULLTEXT01.pdf [retrieved on 2015-12-10] * abstract * * page 9, line 8 - page 10, line 4 * * page 11, line 1 - page 12, line 11 * * page 15, line 33 - page 16, line 11 * * page 16, line 12 - line 24 * * page 19, line 3 - page 20, line 8 * * page 22, line 1 - line 30 * * figures 3.1,4.1 * | 1-15 | INV. G06F17/30 |
| A | DAVID M BLEI ET AL: "Latent Dirichlet Allocation", JOURNAL OF MACHINE LEARNING RESEARCH, vol. 3, 1 January 2003 (2003-01-01), pages 993-1022, XP055098158, * abstract * * Section 3 * | 1-10 | |
| A | NIKLAS JAKOB ET AL: "Beyond the Stars: Exploiting Free-Text User Reviews to Improve the Accuracy of Movie Recommendations", PROCEEDINGS OF THE 1ST INTERNATIONAL CIKM WORKSHOP ON TOPIC-SENTIMENT ANALYSIS FOR MASS OPINION, 6 November 2009 (2009-11-06), XP055235476, * abstract * * Section 4.1 * * Section 5.1.3 * * Section 5.2 * | 1-10 | |

TECHNICAL FIELDS
SEARCHED      (IPC)

G06F

-/--

The present search report has been drawn up for all claims

| Place of search | Date of completion of the search | Examiner |
|---|---|---|
| Berlin | 10 December 2015 | Pose Rodríguez, J |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

.............................................................................

& : member of the same patent family, corresponding
  document

EPO FORM 1503 03.82 (P04C01)

Europäisches
Patentamt

European
Patent Office

Office européen
des brevets

# EUROPEAN SEARCH REPORT

Application Number

EP 15 30 5831

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | Christophe Dupuy ET AL: "Content Profiling from Text Reviews", , 10 December 2015 (2015-12-10), XP055235594, Retrieved from the Internet: URL:http://www.di.ens.fr/~cdupuy/Projects/ Content_profiling/2014_DUPUY_contents.pdf [retrieved on 2015-12-10] * No publication date of the document can be obtained but it is considered to be a document which is highly relevant to the invention (see D2: abstract; Section 3.1, 3.2 and 3.3 which also disclose a movie recommendation system based on the topics extracted from the user's reviews using LDA) * ----- | 1-10 | |

TECHNICAL FIELDS
SEARCHED      (IPC)

The present search report has been drawn up for all claims

| Place of search | Date of completion of the search | Examiner |
|---|---|---|
| Berlin | 10 December 2015 | Pose Rodríguez, J |